# EUROPÄISCHE PATENTANMELDUNG

(11) **EP 1 421 915 A1**
(43) Veröffentlichungstag der Anmeldung: **26.05.2004**
(21) Anmeldenummer: 03025178.9
(22) Anmeldetag: 04.11.2003
(51) Int. Cl.: A61C 9/00

(54) **Dentaler Abdrucklöffel**

(30) Priorität: 21.11.2002 DE 10254360
(71) Anmelder: Pauli Zahntechnik GmbH, 78570 Mühlheim/Donau (DE)
(72) Erfinder: Pauli, Hans-Werner, 78570 Mühlheim (DE)
(74) Vertreter: Möbus, Daniela, Dr.-Ing.

(57) **Zusammenfassung**

Ein dentaler Abdrucklöffel für die Erstellung eines Gebissabdrucks mit Hilfe einer Abdruckmasse, wobei der Abdrucklöffel einen harten Löffelgrundteil (10) und einen weichen Löffelandruckteil (12) aufweist.

## Beschreibung

Die vorliegende Erfindung betrifft einen dentalen Abdrucklöffel zur Herstellung eines Gebissabdrucks eines voll-, teil-oder unbezahnten Ober- oder Unterkiefers, der dann einem Zahntechniker dazu dient, Kunstkonstruktionen, wie Brücken, Implantatkonstruktionen, Kronen und dergleichen, anzufertigen.

Solche Dental-Abdrucklöffel sind seit langem bekannt. Sie werden mit einer Abdruckmasse gefüllt und dann an den Gaumen oder an den Unterkiefer im Mund des Patienten gedrückt. Um einen korrekten Abdruck zu bekommen, muss der Abdrucklöffel, der häufig aus Metall besteht, fest gegen den Gaumen oder den Unterkiefer des Patienten gedrückt und in dieser Stellung auch eine Zeit lang bis zur Erstarrung der Abdruckmasse gehalten werden. Der Löffel kann dabei im empfindlichen Mundbereich unangenehme Druckstellen oder sogar Schmerzen verursachen.

Damit auch alle Zwischenräume und Konturen des Zahnverlaufs sicher zum Abdruck kommen, wird in der Regel reichlich Abdruckmasse in den Abdrucklöffel gefüllt. Wenn der Löffel dann gegen den Gaumen oder den Unterkiefer des Patienten gedrückt wird, quillt durch das Eintauchen des Kiefers und/oder der Zähne überschüssige Abdruckmasse insbesondere vorne am Mund und auch hinten im Rachenraum heraus. Es kann sogar sein, dass der Patient einen Teil der hinten im Rachenraum herausquellenden Abdruckmasse versehentlich schluckt. Sowohl der Druck, den der Abdrucklöffel auf den Gaumen oder Unterkiefer ausübt, als auch das Herausquellen von Abdruckmasse stellen für den Patienten sehr unangenehme Erscheinungen dar, die oft zu Brechreiz und Übelkeit führen, sodass die Abdrucknahme unter Umständen sogar abgebrochen werden muss.

Der Erfindung liegt die Aufgabe zugrunde, einen Abdrucklöffel für die Erstellung eines Gebissabdrucks so auszubilden, dass er beim Andrücken an den Gaumen oder Unterkiefer weniger Schmerzen und Unannehmlichkeiten verursacht.

Die gestellte Aufgabe wird erfindungsgemäß durch den Abdrucklöffel für die Erstellung eines Gebissabdrucks, der die im Hauptanspruch aufgeführten Merkmale aufweist, gelöst. Die Unteransprüche geben bevorzugte Weiterbildungen an.

Der erfindungsgemäße Abdrucklöffel für die Erstellung eines Gebissabdrucks weist zwei Teile auf, nämlich einen harten Löffelgrundteil und einen weichen Löffelandruckteil. Der Löffelgrundteil stellt den Hauptteil des Abdrucklöffels dar, der die Abdruckmasse aufnimmt. Der weiche Löffelandruckteil ist am oberen und äußeren Rand des harten Löffelgrundteils angebracht und ergibt somit einen weichen Abschluss des harten Löffelgrundteils. Wenn der Abdrucklöffel gegen den Gaumen oder Unterkiefer des Patienten gedrückt wird, so werden durch den weichen Löffelandruckteil Druckstellen und Schmerzen vermieden.

In einer vorteilhaften Ausführungsform ist der Löffelandruckteil in Form einer Andrucklippe ausgebildet. Somit kann er auch verhindern, dass überschüssige Abdruckmasse austritt.

Weiterhin ist es aus Gründen der flexiblen Herstellbarkeit und der Hygiene vorteilhaft, wenn der Löffelandruckteil aus Kunststoff und für den Einmalgebrauch hergestellt ist. Dieser Löffelandruckteil kann dann beispielsweise an den Löffelgrundteil kunststofftechnisch angespritzt werden.

Um ein Herausquellen der Abdruckmasse, wenn der Abdrucklöffel an den Gaumen oder Unterkiefer des Patienten gedrückt wird, zu verhindern, weist der erfindungsgemäße Abdrucklöffel in einer weiteren vorteilhaften Ausführungsform ein Reservoir auf, das die überschüssige Abdruckmasse aufnehmen kann. Die Abdruckmasse verbindet sich auch teilweise in dem Reservoir, sodass ein Abreißen des Abdruckmaterials aus dem Löffel verhindert wird. Dieses Reservoir ist beispielsweise unterhalb des als U-förmige Rinne ausgebildeten Löffelaufnahmeteils des Löffelgrundteils, der die Abdruckmasse enthält, ausgebildet und ermöglicht einen besseren Verbund der Abdruckmasse mit dem Abdrucklöffel.

Damit die überschüssige Abdruckmasse leicht in das Reservoir überfließen kann, ist es vorteilhaft, wenn am Löffelaufnahmeteil Öffnungen ausgebildet sind, durch die die überschüssige Abdruckmasse vom Löffelaufnahmeteil in das Reservoir fließen kann. Diese können beispielsweise am unteren inneren Rand des Löffelaufnahmeteils ausgebildet sein.

Sollte so viel überschüssige Abdruckmasse vorhanden sein, dass sie das Reservoir nicht aufnehmen kann, ist es vorteilhaft, wenn das Reservoir nach hinten offen ausgebildet ist, so dass hier nochmals Abdruckmasse in den Mundraum entweichen kann. Dafür kann das Reservoir in seinem Boden zusätzlich auch noch eine Aussparung aufweisen.

Ein Ausführungsbeispiel eines erfindungsgemäß ausgebildeten Abdrucklöffels für die Erstellung eines Gebissabdrucks wird nachfolgend anhand der beiliegenden Zeichnungen erläutert. In den Zeichnungen sind gleiche Elemente in allen Zeichnungsfiguren mit den gleichen Bezugszahlen gekennzeichnet.

Es zeigen:
- Fig. 1: einen perspektivische Explosionsdarstellung einer Ausführungsform des erfindungsgemäßen Abdrucklöffels; und
- Fig. 2: eine perspektivische Darstellung des in Fig. 1 gezeigten Abdrucklöffels im zusammengebauten Zustand.

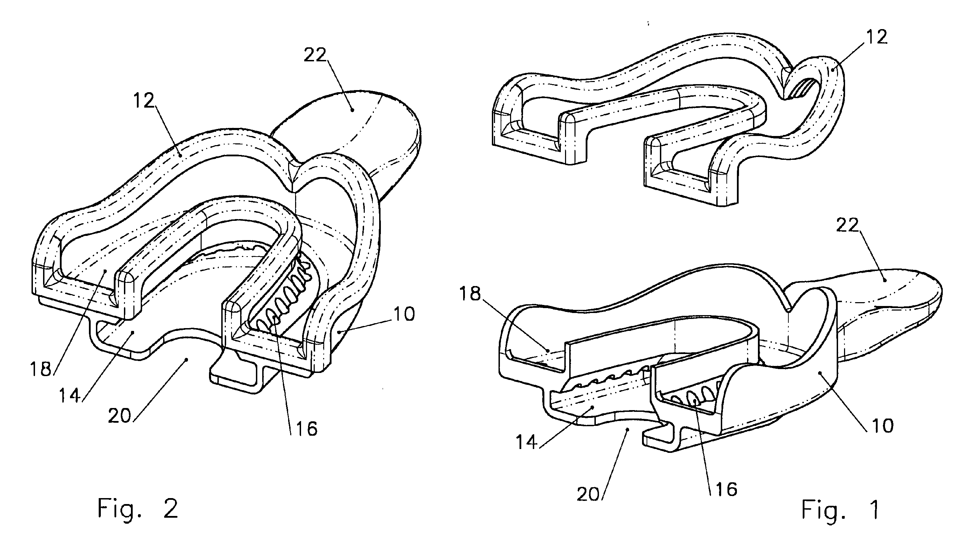

Fig. 1 zeigt eine perspektivische Darstellung einer Ausführungsform eines erfindungsgemäßen Abdrucklöffels. Zur übersichtlicheren Darstellung sind dabei der Löffelgrundteil 10 und der Löffelandruckteil 12 getrennt dargestellt. Im Löffelgrundteil kann man weiter das Reservoir 14 und die Öffnungen 16 sehen, durch die überschüssige, hier nicht dargestellte Abdruckmasse aus dem als U-förmige Rinne ausgebildeten Löffelaufnahmeteil 18 in das Reservoir 14 überfließen kann. Das Reservoir 14 ist nach hinten hin offen ausgebildet und weist eine zusätzliche Aussparung 20 auf. Vorne am Löffelgrundteil 10 ist noch ein Griff 22 angeordnet, um den gesamten Abdrucklöffel handhaben zu können.

Fig. 2 zeigt den Abdrucklöffel der Fig. 1 in zusammengebautem Zustand.

### Bezugszeichenliste:

- 10: Löffelgrundteil
- 12: Löffelandruckteil
- 14: Reservoir
- 16: Öffnungen
- 18: Löffelaufnahmeteil

- 20: Aussparung
- 22: Griff

## Patentansprüche

1. Dentaler Abdrucklöffel für die Erstellung eines Gebissabdrucks mit Hilfe einer Abdruckmasse, **dadurch gekennzeichnet, dass** der Abdrucklöffel einen harten Löffelgrundteil (10) und einen weichen Löffelandruckteil (12) aufweist.

2. Abdrucklöffel nach Anspruch 1, **dadurch gekennzeichnet, dass** der weiche Löffelandruckteil (12) am oberen und äußeren Rand des harten Löffelgrundteils (10) in Form einer Andrucklippe ausgebildet ist.

3. Abdrucklöffel nach Anspruch 1 oder 2, **dadurch gekennzeichnet, dass** der weiche Löffelandruckteil (12) aus Kunststoff ausgebildet ist.

4. Abdrucklöffel nach Anspruch 3, **dadurch gekennzeichnet, dass** der weiche Löffelandruckteil (12) an den harten Löffelgrundteil (10) kunststofftechnisch angespritzt ist.

5. Abdrucklöffel nach einem der vorhergehenden Ansprüche, **dadurch gekennzeichnet, dass** der harte Löffelgrundteil (10) ein Reservoir (14) für die Aufnahme überschüssiger Abdruckmasse aufweist.

6. Abdrucklöffel nach Anspruch 5, **dadurch gekennzeichnet, dass** das Reservoir (14) unterhalb eines als U-förmige Rinne ausgebildeten Löffelaufnahmeteils (18), der die Abdruckmasse aufnimmt, angeordnet ist und einen besseren Verbund von Abdruckmasse und Abdrucklöffel ermöglicht.

7. Abdrucklöffel nach Anspruch 5 oder 6, **dadurch gekennzeichnet, dass** am Löffelaufnahmeteil (18) Öffnungen (16) angebracht sind, durch die überschüssige Abdruckmasse aus dem Löffelaufnahmeteil (18) in das Reservoir (14) überfließen kann.

8. Abdrucklöffel nach Anspruch 7, **dadurch gekennzeichnet, dass** die Öffnungen (16) am inneren unteren Rand des Löffelaufnahmeteils (18) angeordnet sind.

9. Abdrucklöffel nach einem der Ansprüche 5 bis 8, **dadurch gekennzeichnet, dass** das Reservoir (14) nach hinten offen ausgebildet ist.

10. Abdrucklöffel nach einem der Ansprüche 5 bis 9, **dadurch gekennzeichnet, dass** das Reservoir (14) in seinem Boden eine Aussparung (20) aufweist.
